# EUROPEAN PATENT SPECIFICATION

(11) **EP 3 198 842 B1**
(45) Date of publication and mention of the grant of the patent: **25.07.2018**
(21) Application number: 15781196.9
(22) Date of filing: 24.09.2015
(51) Int. Cl.: H04L 29/06, H04L 12/26, H04L 12/801, H04L 12/851, H04L 29/08

(54) **MANAGING CLASSIFIED NETWORK STREAMS**
VERWALTUNG VON KLASSIFIZIERTEN NETZWERKSTRÖMEN
GESTION DE FLUX DE RÉSEAUX CLASSIFIÉS

(30) Priority: 25.09.2014 US 201414497313
(43) Date of publication of application: 02.08.2017
(73) Proprietor: Microsoft Technology Licensing, LLC, Redmond, WA 98052-6399 (US)
(72) Inventor: TALAT, Ahmed, Redmond, Washington 98052-6399 (US); BHATT, Vibhor, Redmond, Washington 98052-6399 (US); SINNEMAKI, Jeff, Redmond, Washington 98052-6399 (US); ALEKSENKO, Alexei, Redmond, Washington 98052-6399 (US); SACSON, Ilia, Redmond, Washington 98052-6399 (US); FULLER, Jeffrey C, Redmond, Washington 98052-6399 (US); SALMAN, Milena, Redmond, Washington 98052-6399 (US); RAVI, Madhusudhan, Redmond, Washington 98052-6399 (US); KARAM, Mohammed M, Redmond, Washington 98052-6399 (US); JAIN, Neel, Redmond, Washington 98052-6399 (US)
(74) Representative: Goddar, Heinz J.
(86) International application number: PCT/US2015/051951
(87) International publication number: WO 2016/049321

(56) References cited:
- EP-A1- 1 096 742
- US-A1- 2010 010 974

## Description

### BACKGROUND

When multiple applications on a computing device share the same limited network resources on or external to the computing device, various techniques have been used to attempt to balance the networking needs of those applications. Computer users and applications usually prefer certain trade-offs and prioritizations among applications consuming network resources. However, in practice, prior techniques for sharing network access often have not optimally realized those preferences and priorities. For example, a user of a device may prefer that Voice over IP (VoIP) calls on their device have low network latency and that web browsing on the device be snappy and responsive. The user also may prefer that background bulk network transfers, such as cloud synchronizations and operating system updates, yield their consumption of the device's network resources in a way that enables satisfactory foreground performance and maintains reasonable progress.

In addition to often failing to satisfactorily share network access, prior access-sharing techniques have often not been convenient for software developers to access or implement. For example, while Quality of Service (QoS) facilities can be helpful, they are often not available or are not implemented in a uniform manner. Most QoS technology occurs below the application level and therefore may not be reliably manipulable by applications. Most QoS approaches, Differentiated Services for instance, depend on the behavior and support of the network between two endpoints. Such support may not exist on all network paths. Regarding convenience, network sharing behavior has also been implemented within applications, but this has usually required complex network programming with little or no direct coordination between applications. Not only is it duplicative for different applications to implement their own network-sharing logic, but the different resource-sharing behaviors of applications may conflict.

While there are protocols such as LEDBAT (Low Extra Delay Background Transport) that are implemented by operating systems to allow applications to implement specific types of network-consuming behavior, coding to leverage such a protocol may increase the cost and overhead of developing an application and may make a developer less likely to use such a protocol. In addition, widely deployed low-priority TCP (Transport Control Protocol) mechanisms like LEDBAT have shortcomings and often do not provide an ideal user experience (see Internet Engineering Task Force Request for Comments 6297 for other examples). The LEDBAT protocol, for instance, only restricts TCP send windows and has no effect on the receive stream, yet most client-side Internet traffic is inbound. Even when a mechanism like LEDBAT is available without requiring complex developer coding, it may not be possible for an operating system or network stack to determine that an application should use such a mechanism. In other words, user and application intent regarding network resource conflicts has been difficult to infer and applications have rarely specified their network priorities. Nor has sharing of a device's network resources been implemented in a way that is consistent among competing applications without being susceptible to problems such as the "latecomer" phenomena(e.g., see Request For Comments 6817, section 4.4).

Techniques related to implementing and leveraging classified network streams are discussed below.

Prior art document EP 1 096 742 describes multimedia flows classified and grouped into a set of QoS Classes, where flows of different QoS classes are identified and differentiated.

### SUMMARY

The following summary is included only to introduce some concepts discussed in the Detailed Description below. This summary is not comprehensive and is not intended to delineate the scope of the claimed subject matter, which is set forth by the appended claims.

Embodiments described herein relate to classifying network streams and regulating behavior of the streams based on their respective classes. One technique for managing streams involves analyzing applications, obtaining indicia of features of the applications, and using those features to infer classes to which streams of the applications may be assigned. Another technique involves deploying beacon nodes at the edge of a network. The beacon nodes inform a stream manager about network conditions such as latencies with regard to network boundaries or regions. Another embodiment for facilitating management of streams involves a subscription service for UDP applications. A UDP application may subscribe to the service, which may be provided by an operating system hosting the application. Events are published to any subscribed UDP applications to inform the UDP applications of changes in networking conditions. The UDP applications, in turn, may adapt their internal transmission control logic.

In other embodiments an operating system implements classes of network streams. Applications assign their network streams to the classes. The operating system, in turn, regulates the streams according to which classes the streams are in. As conditions change, network resources may be made available or more fully utilized by regulating streams according to which classes they have been assigned to. Network resources may be made available, perhaps rapidly or preemptively, for streams in higher priority classes by restricting streams in lower priority classes.

Many of the attendant features will be explained below with reference to the following detailed description considered in connection with the accompanying drawings.

### BRIEF DESCRIPTION OF THE DRAWINGS

The present description will be better understood from the following detailed description read in light of the accompanying drawings, wherein like reference numerals are used to designate like parts in the accompanying description.
Figure 1 shows an arrangement for automatically or implicitly classifying applications or streams.
Figure 2 shows examples of profile-class mappings and application-class mappings.
Figure 3 shows a process for selecting a stream class using profile-class mappings and application-class mappings.
Figure 4 shows beacon nodes that may provide network information usable by a stream manager to help regulate streams for compliance with classes thereof.
Figure 5 shows an embodiment for helping user datagram protocol (UDP) applications improve their network behavior.
Figure 6 shows an embodiment where TCP send and receive window sizes are used by a stream manager to regulate streams according to their classes.
Figure 7 shows a computing device with an operating system that implements a network stack.
Figure 8 shows a process of an application using an application programming interface (API).
Figure 9 shows an example of a stream classification model.
Figure 10 shows example streams with respective network performance categories.
Figure 11 shows another example of a classification model.
Figure 12 shows a detailed view of a stream manager.
Figure 13 shows an example process by which the stream manager may regulate streams.
Figure 14 shows another example of a stream classification model.
Figure 15 shows a process for an embodiment of collective stream management.
Figure 16 shows additional details of a computing device.

### DETAILED DESCRIPTION

### MANAGING CLASSIFIED STREAMS

The section titled "NETWORK STREAM CLASSIFICATION MODELS AND IMPLEMENTATIONS THEREOF" below describes techniques for classifying network streams and regulating use of network resources accordingly. This section, titled "MANAGING CLASSIFIED STREAMS", describes related methods for managing classified streams. This section will begin with an explanation of how an application's streams may be implicitly classified when the application does not explicitly classify its streams. A technique of using network-edge signals to improve network resource allocation is discussed next. Various other techniques are then discussed, including how to provide a notification service for UDP (User Datagram Protocol) applications, how to use send and receive windows to assist with regulating streams, and others.

The section titled "NETWORK STREAM CLASSIFICATION MODELS AND IMPLEMENTATIONS THEREOF" below describes how streams for carrying network traffic may be explicitly classified by applications, for instance by using an application programming interface (API) provided by an operating system. While the approach of having an application explicitly classify its network streams is effective for aligning the application's preferences with the operating system's management of network resources, this explicit classification approach may not always be practical. For example, an application or program that has already been coded and compiled without taking advantage of stream classification facilities would, absent a shim or other work-around, most likely need to be rewritten, recompiled, retested, and redistributed. For many reasons, modifying an application may not be possible or practical.

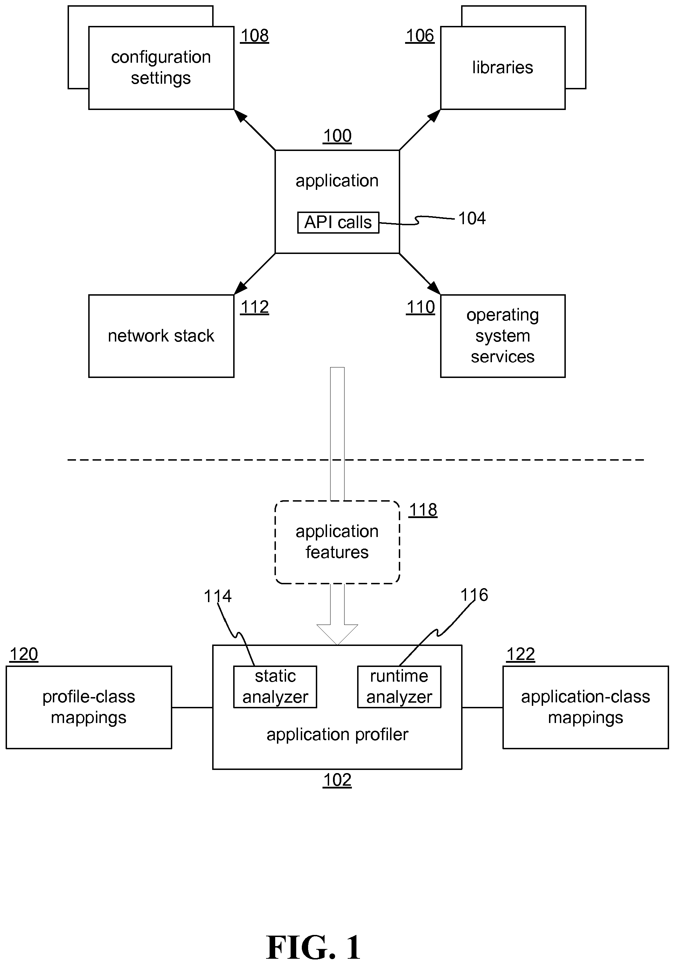

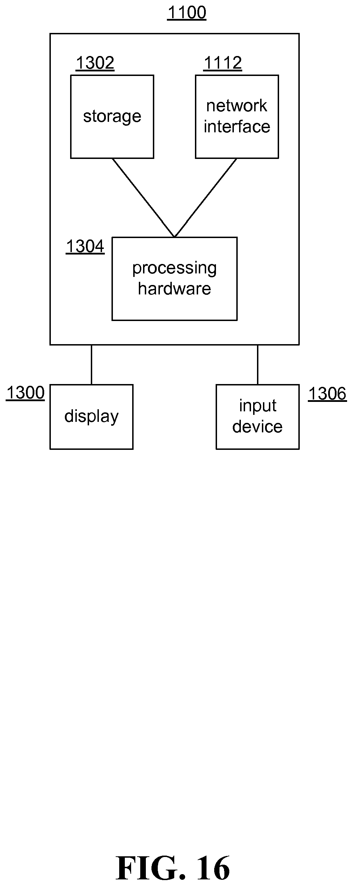

Figure 1 shows an arrangement for automatically or implicitly classifying applications or streams. An application 100 running on a computing device typically uses various resources of the computing device (see Figure 16) or its operating system. These traits of an application, among others, may be used by an application profiler 102 to attempt to determine a default stream classification for the application. For this explanation, the application 100 represents any arbitrary code or software that might be running on a computing device. The application 100 may have various static and dynamic features observable to the operating system. For instance, the application 100 may issue application programming interface (API) calls 104 to invoke or link libraries 106, to access system or application configurations settings 108, to interact with operating system services 110, to interact with a network stack 112, and so forth.

The application profiler 102 may have a static analyzer 114 and/or a dynamic runtime analyzer 116. Either or both of these components may be used to determine which API calls 104 are issued by the application 100. Runtime API calls 104 may be identified by hooks, event listeners, or other run-time intercepts, and the runtime analyzer 116 is notified. API calls 104 may also be identified by static analysis performed by the static analyzer 114, either just prior to executing the application, at a time of installing the application, during a periodic maintenance procedure, etc. The static analysis may involve identifying linked-to libraries 106 (perhaps identified in an application manifest or in a special section of an executable file), dependencies on known operating system files, parsing configuration files or settings, etc.

Other features of the application 100 may also be collected by the application profiler 102. For example, the application profiler 102 may determine: whether the application is configured to run as a background or foreground process, for example, based on whether a terminal is associated with the application; whether the application access multimedia hardware available on its host computing device (thus suggesting a streaming class); types of content flowing into the application (e.g. hypertext markup language (HTML) code that includes a multimedia hyperlink or content), registration with a multimedia scheduler of the operating system, a network port or protocol associated with a stream, etc. Any pieces of information ascertainable about the application 100 may serve as hints about what network classifications, if any, would be appropriate for the application. In one embodiment, a remote network service may be able to provide classifications. For example, the application profiler 102 may send an identifier of an application to the service and may receive, in response, a classification provided based on metadata about the application obtained from a managed software distribution service (i.e., an online software "store"). In any case, the collected application features 118 are received by the application profiler 102 and used to attempt to determine a class for the application 100.

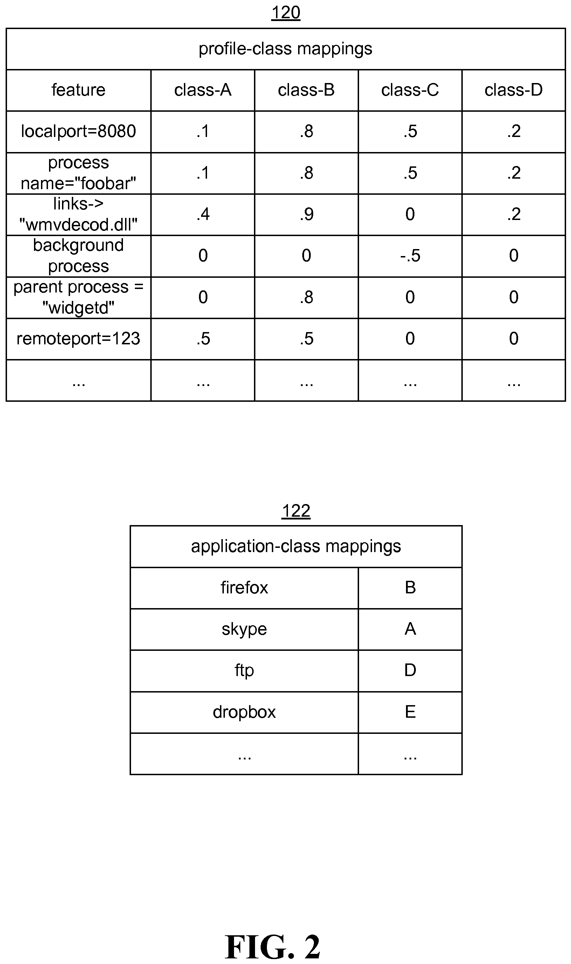

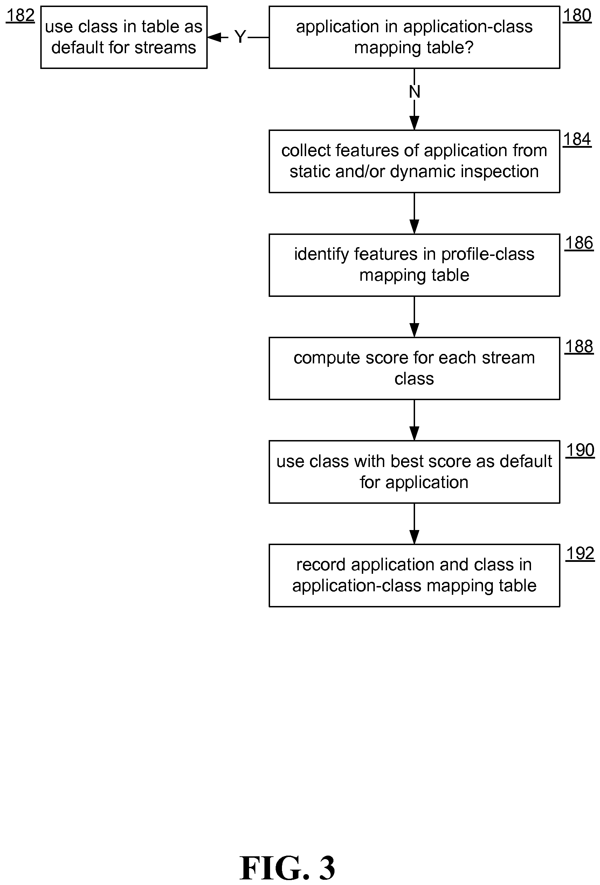

In one embodiment, the application profiler 102 may perform an algorithm to determine a most likely network stream class that is to be associated with the application 100. The application profiler 102 may have a set of profile-class mappings 120 that map application features to a set of predefined classes. That is, the profile-class mappings 120 may indicate which features correspond to which classes. Figure 2 shows an example of the profile-class mappings 120 and the application-class mappings 122. In this example, application features are assigned weights for different stream classes. The application profiler 102 may also maintain application-class mappings 122 to track which applications are associated with which stream classes. Both of these mappings will be discussed with reference to Figure 3.

Figure 3 shows a process for selecting a stream class using the profile-class mappings 120 and the application-class mappings 122. At step 180 the application profiler 102 receives a request to classify a target application or a stream thereof. The request might be initiated by any type of event, such as an application starting execution, an application being installed, an iteration of a background maintenance process, an application's interaction with a stream, traffic beginning to flow on the stream, forming a stream or initiating a network connection for a stream, a determination that network resources are sufficiently constrained, or others. The request may be initiated by a stream manager that manages network streams, for example, when recalibrating managed streams. In one embodiment, only applications that are determined to not use a stream classification API are implicitly classified.

At step 180, the application-class mappings 122 are referenced to determine if the target application is already associated with a particular class, then at step 182 that class is used as a default class for streams of the target application. That is, streams of the target application will be managed by a stream manager (in particular, with respect to regulation of consumption of local network resources) according to the class that is already associated with the target application as indicated in the application-class mappings 122.

If, at step 180, it is determined that the target application is not already associated with a stream class, then additional steps are performed to implicitly classify the target application. At step 184, application features are collected as described above. At step 186, the profile-class mappings 120 are consulted to identify any features therein that are features of the target application. For example, if the target application uses TCP (transmission control protocol) port 8080, then the first row of the profile-class mappings may be used. In one embodiment, a running score is maintained for each of the potential classes that could be selected from a classification model. As features of the target application are matched in the profile-class mappings, the corresponding weights are added to the corresponding class scores. When all of the target application's features have been processed, at step 190 the class having the highest resulting score is selected as a default class for the target application. The class with the highest score is presumably the class that best matches the behavior or performance preferences of the target application. In other words, the scores of the respective classes indicate how well the target application's features fit the profiles of the various stream classes provided by the operating system. Approaches other than scoring may be used. For instance, a system of prioritizing features may be used (e.g., "use of libraryZ is always class C"), a combination of scoring and Boolean logic rules, may be used, etc. Regardless of how one or more target application features or traits are mapped to a class, the default class selected for the application may, at step 192, be stored in the application-class mappings 122. The next time the target application is processed, the application-class mappings 122 will cause the application profiler 102 to again use the same default class.

Other methods for implicit application or stream classification may be used. For example, a list of user settings may be maintained by the operating system, and a user interface may allow a user to associate classes with specific applications. In another embodiment, network behavior of applications may be tracked and analyzed to determine classes that applications should have. For instance communication patterns (e.g., bursty, long-duration) may be matched to particular classes. In yet another embodiment, if implicit class-application associations are stored and re-used, such associations may be reevaluated or deleted after a period of time has passed. Moreover, if a previously classified application begins to use an explicit API for stream classification, then any previous implicit association with a class may be removed or overridden.

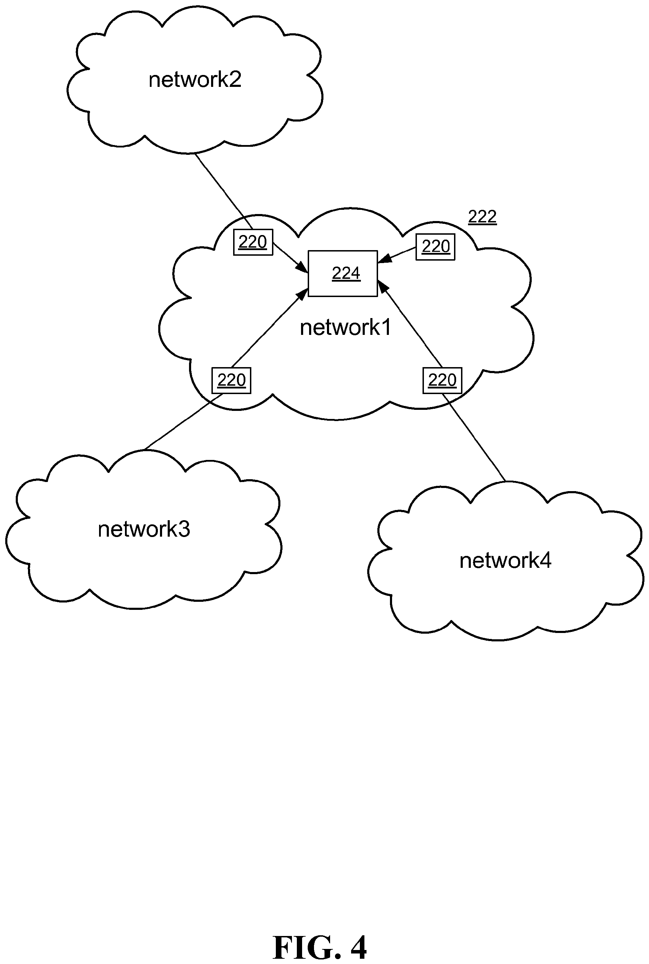

Figure 4 shows beacon nodes 220 that may provide network information usable by a stream manager to regulate streams for compliance with classes thereof. As discussed in the above-referenced related patent application, a stream manager may be implemented in an operating system to regulate streams' consumption of the local host's network resources. The beacon nodes 220 may be thought of as extending the local operating system's visibility about the network.

In one embodiment, it may be helpful for a stream manager to have information about local network conditions, and in particular the "last mile" of connectivity. In other words, the stream manager might regulate streams and contention between streams with improved efficiency or results by throttling streams based on edge network information. In this embodiment, a network, for instance a first network 222 operated by a large entity, may have beacon nodes 220 at the edge of the first network 222. The beacon nodes 220 may be implemented as new processes running on border gateways or on servers residing near a network edge, as dedicated server machines near the network edge, etc. The beacon nodes 220 may record network conditions and report those conditions back to a collecting service 224. In particular, latencies between nodes within the first network 222 may be observed and reported, as well as latencies to nodes outside the first network 222. In one embodiment, known external nodes may be polled to estimate the added latency caused by communication with nodes on external networks. Moreover, the latency information may indicate different latencies at different edges of the first network 222. It may also be helpful to help identify which traffic is crossing the Internet. Non-Internet traffic may have low latency, whereas Internet traffic may have high latency.

The edge-provided latency information may be used in various ways by a local stream manager to regulate streams. A local stream manager may obtain latency information from the collecting service 224 and use that latency information to regulate streams. In particular, when a new stream is initiated, a baseline network latency (or other property) may be obtained. The edge-related latency information may be used to set initial stream baselines to values that facilitate better stream management. The latency information may also be used for setting initial or ongoing sizes of congestion windows or send and receive windows. To elaborate on how edge-related latency information can be used in LEDBAT-like protocols, consider that the LEDBAT protocol, for example, depends on a global base latency, or the minimum latency possible through a network. The LEDBAT protocol does not mix information between streams; all streams are managed based on the base latency. Edge latency information can be used to disambiguate streams going through different networks or gateways, since the streams may have significantly varying base latencies. The edge-provided latency information can help with the disambiguation by providing a stream with a known remote endpoint and gateway (such as an Internet server going through the local machine's Internet Service Provider).

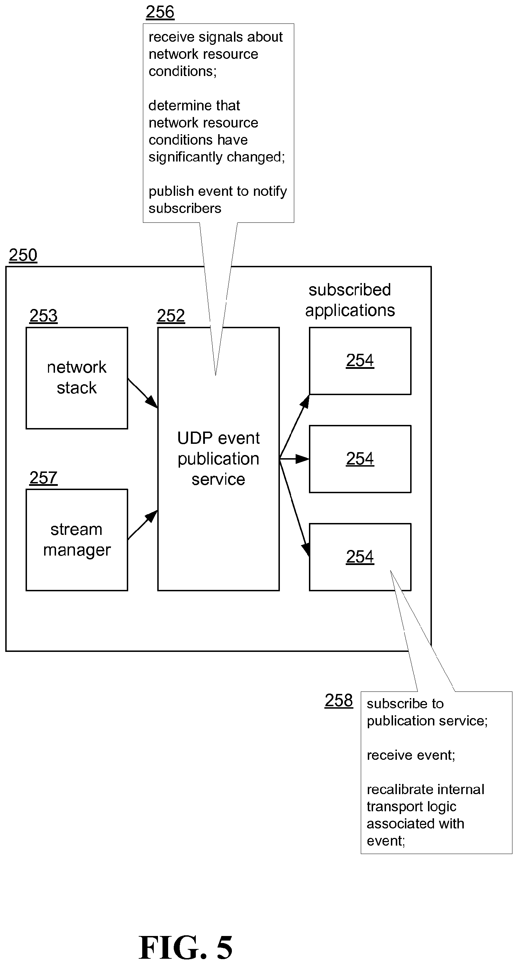

Figure 5 shows an embodiment for helping UDP applications to improve their network behavior. Applications that use the UDP protocol often implement their own transmission controls, such as packet sequencing, retransmission, and error checking. In some implementations, it may not be practical to manage UDP streams as classified streams. However, applications often have traffic regulating logic that might benefit from being informed of conditions that pertain to network performance and use of network resources. A computing device 250 may be provided with an event publication service 252. The event publication service 252 may be an operating system service available to applications 254, which may subscribe to the publication service by an appropriate API call.

The event publication service 252 may perform a process 256. The process 256 may involve receiving signals about network resource conditions. In effect, any type of information that a stream manager 257 might use for managing streams can potentially be passed on to the event publication service for publication. In one embodiment, the event publication service 252 may collect network performance information from a network stack 253 and make its own determinations about when network conditions have changed in a way that merits notifying the subscribed applications 254. In another embodiment, the stream manager 257 may periodically push out updates about current latency and bandwidth performance of the computing device 250.

In turn, an application 254 may have custom logic 258 to handle notifications from the event publication service. For instance, after subscribing to the event publication service, an application may receive an event. The event, which might be conveyed by some form of interprocess-communication, might indicate merely that network conditions have changed and a recalibration is called for. The event might also have specific information about network conditions, such as current bandwidth or latency performance, current congestion levels, recommended window sizes, etc. The receiving application will then invoke custom code for recalibrating its network behavior. For instance, if the event indicates that one or more stream classes are underperforming or overperforming, the application may correspondingly decide to increase or decrease its current traffic throughput, suspend communication, or make other adjustments designed to improve its own behavior or to help allow better management of streams by the stream manager 257. In cases where an application implements its own transport-type features, such as a send window, a receive window, a congestion window, etc., the application may adjust those features in response to a published event.

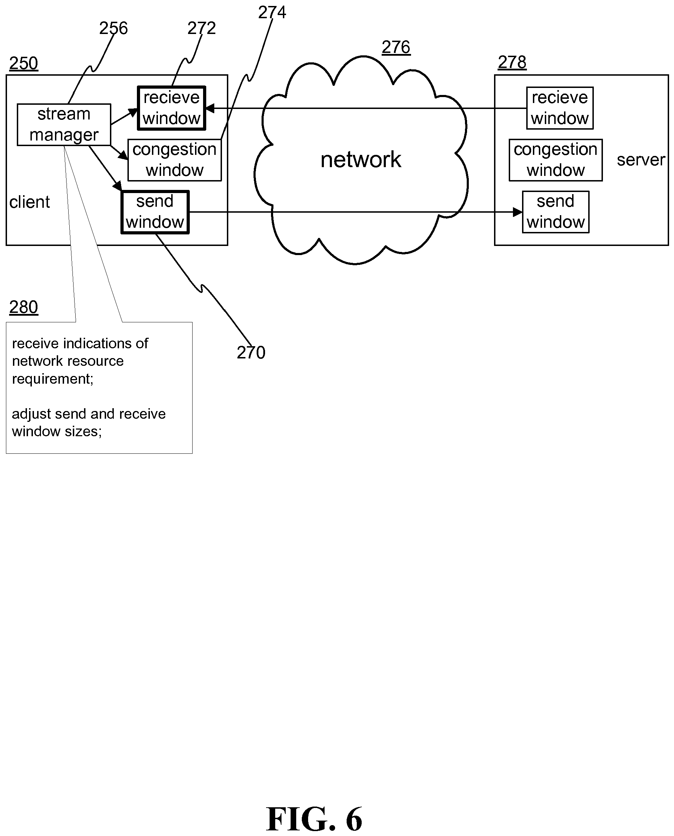

Figure 6 shows an embodiment where TCP send and receive window sizes are used by a stream manager to regulate streams according to their classes. The above-referenced patent application discusses a stream manager regulating network streams according to their classes. One mechanism for stream regulating is to modify the sizes of the TCP send and receive windows 270, 272 that are associated with a TCP stream. When the computing device 250 is communicating via a network 276 with a remote device 278, both ends of the TCP connection may have a send and receive window. However, a receive window has not been used by a receiving device to regulate local network resources, in particular latency. Typically, some low-delay extra bandwidth (LEDBAT) implementations have assumed that remote nodes are also implementing LEDBAT or an equivalent bandwidth/latency regulation scheme. Therefore, these implementations typically only use the congestion window to regulate traffic; each side assumes that the other will do its part to regulate traffic. Adjusting sizes of the local send and receive windows 270, 272 at computing device 250 gives the stream manager 256 greater control over backing-off some streams (e.g., in a first class) when other streams (e.g., in a second and higher priority latency class) require additional responsiveness.

Specifically, the stream manager 256, when managing a stream, may perform a process 280 of receiving indications of a network resource requirement or a change in local conditions. For instance, the stream may be in a high priority latency class and the stream manager 256 might determine that the stream is at or approaching a latency requirement or threshold. To assure that a latency priority or a latency floor for the stream's class is maintained, the stream manager then adjusts both the send and receive windows 272, 274 of other streams, according to their classes. This can enable the stream manager 256 to rapidly throttle those other streams (in particular, streams in a low priority class) and allow the stream in the high priority latency class to quickly operate with low latency. In one embodiment, the sizes of the send and receive windows 272, 272 may be determined according to information about delay. For example, one-way delay may be measured using TCP timestamps. Note that the size of the congestion window 274 may also be manipulated to regulate streams according to their classes. Note also that the stream manager 256 need not directly manage windows. The stream manager 256 may communicate with the network stack and inform the network stack what the window sizes should be, and then the network stack implements those sizes.

An algorithm for window manipulation can be implemented as follows. First, a stream's window size may be resized more quickly the farther away the stream is from the latency goal of its stream class. For example, if a streams' class targets a latency of under 100 ms and the current measured latency is 400 ms, then window sizes of other streams (perhaps prioritized by class) are rapidly lowered. If the current measured latency is 150 ms, then the windows sizes are gradually decreased. In other words, rate of window size modification may be a function of the difference between the current latency and the stream's target latency. A simpler resizing approach, for instance changing windows sizes by static amounts, may cause extreme fluctuations that overshoot the target latency.

Second, a previously advertised window size is not rescinded. The remote sender is allowed to fully use any window size previously advertised, but future window size advertisements may be restricted. This may help avoid any compatibility issues with the remote sender not conforming to changes that have been previously advertised.

Third, a hard minimum window size may be maintained. In some scenarios this may be relevant for several reasons. First, if a TCP stream's window size becomes lower than 2 MSS (maximum segment size), then the TCP stream can encounter delayed ACKs and subsequent increased latency. In addition, minimum throughput logic can be implemented to avoid disconnects by either end of a stream's connection due to low throughput. For example, the some HTTP (hypertext transfer protocol) servers will disconnect an HTTP session if throughput is extremely low for several minutes, even if forward progress is being made. This is partially to avoid denial of service achieved by keeping resources utilized. To achieve this minimum throughput, a heuristic may be used to keep a moving average of throughput, and network impairment may be disabled while the throughput is below the specified minimum throughput. This may allow window sizes to grow gradually rather than instantly reverting to some former values.

Other techniques may also be used in conjunction with embodiments described herein and in the above-referenced related patent application. Concerning traffic regulation, to help with freeing up latency capacity (increasing responsiveness of streams), longer delays may be induced in low-class streams by introducing wait times before sending TCP acknowledgements (ACKs). That is, ACK delays for some streams may be intentionally extended to improve responsiveness (latency) for other streams. Similarly, for upstream traffic, the ACK-receive threshold may be extended, thereby providing longer waits before timing-out on the ACKs and potentially avoiding TCP re-transmits.

In addition, application network usage contracts may be supported by exposing a manifest of one or more tiered network requirements. Examples include an application declaratively specifying a manifest with network bandwidth and latency requirements (or classes) for a Standard Definition video tier and a different set of bandwidth and latency requirements (or classes) for a High Definition video tier for video streaming applications, as well as different fidelity levels in VOIP (voice over Internet Protocol) calls so a central controller can throttle (up and down) through different tiers according to changing network conditions.

It may also be possible to expose stream priority hints to broadband providers. Providers may use the hints to offer lower cost if an application traffic allows longer delays, and conversely may fast track traffic that has been marked appropriately.

Finally, network traffic priority (per stream classes) may be used for power management. Lower priority traffic may be delayed/dropped to save power. That is, traffic may be scheduled for delayed transmission, which may allow battery power to be saved. For example, the stream manager may inform a power management module that it need not maintain power to, or start powering, a radio specifically for a particular stream's connection.

### NETWORK STREAM CLASSIFICATION MODELS AND IMPLEMENTATIONS THEREOF

Embodiments discussed below relate to allowing applications to classify their network streams to a network stack or operating system, which in turn orchestrates sharing of a device's network resources in a system-wide fashion according to the classifications of the network streams. Discussion will begin with a system overview and explanation of how applications can select how the system will regulate their network behavior. Examples of network stream classification models and details for implementing same will be described next.

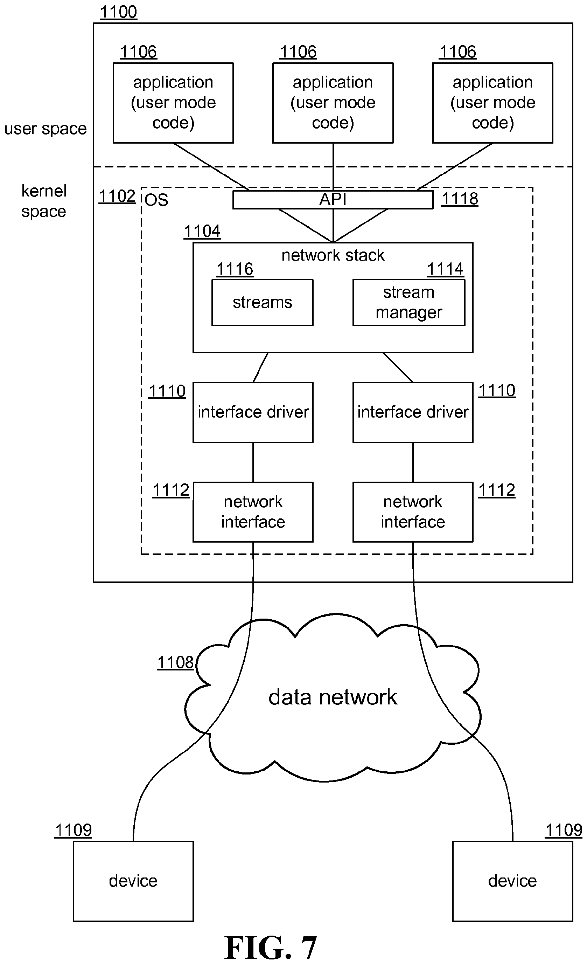

Figure 7 shows a computing device 1100 with an operating system 1102 that implements a network stack 1104. The network stack 1104 may be derived from any known operating system networking stack, with additions or changes apparent from this description. For example, a TCP/IP network stack may be modified or augmented with a wrapper. Generally, implementation at the transport level of any network protocol stack will be convenient. On the computing device 1100, any of a variety of arbitrary applications 1106 may be executing and communicating through a data network 1108. Some examples of applications 1106 are web browsers, background downloaders, online games, realtime voice or video communication programs, database clients, media streaming applications, etc. To exchange data with remote devices 1109, the applications 1106 communicate through the data network 1108, which may be a network carrying IP (Internet Protocol) traffic or variants thereof. In cases where a virtualization layer (e.g., a hypervisor) is present and applications execute on guest operating systems on different virtual machines, network communication may be fully or partly local to the computing device 1100.

The operating system 1102 may include one or more interface drivers 1110 (device drivers) that, among other known functions, pass packets to, and receive packets from, respective network interfaces 1112. It may be assumed that the applications 1106 execute in user space and the operating system 1102 and networking features described herein execute in kernel space. However, this is not a requirement. Kernel mode code or user mode code may assign network classifications to network streams controlled thereby, and a stream manager 1114 may execute in kernel space or user space. In one embodiment, network stream management may be implemented with a user mode wrapper that exchanges packets with a known TCP/IP network stack.

The stream manager 1114 manages and regulates network streams 1116 for the applications 1106. Network streams 1116 (referred to hereafter as "streams") are operating system objects that correspond to respective network connections (e.g., IP 5-tuples) between the computing device 1100 and the remote devices 1109. Typically, each stream has a FIFO buffer and a descriptor or handle used by the operating system and the stream's application to identify the stream when performing operations on the stream. The network stack 1104 may provide a transport-layer module (e.g., a TCP module) that implements a transport protocol on behalf of the streams 1116. The operating system 1102 provides an application programming interface (API) 1118 that applications 1106 use to perform stream related operations such as instantiating a stream object, setting stream parameters, initiating a network connection with a stream, closing the stream, getting and setting values of properties of the stream such as a network address to be connected to, a remote and local port to be used, a protocol to be used, networking parameters, etc. The Winsock API, the Berkeley sockets API, and other similar APIs are all suitable, when extended or modified as described herein, for use as the API 1118.

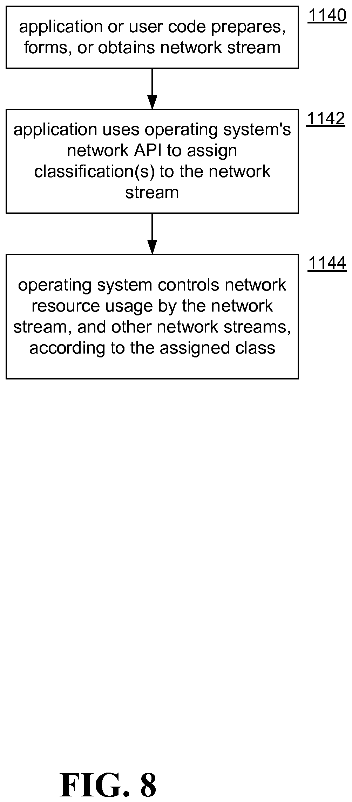

Figure 8 shows a process of an application using the API 1118 to inform the network stack 1104 of a stream class or category to be associated with a specified stream. At step 1140, the application forms or obtains a stream. The stream may or may not have a network connection. The stream, in the application's executing code, may be referenced as a descriptor, a handle, object, etc. The application may obtain the stream from another application or process or may initiate the stream as a new object. In the latter case, various parameters or properties of the stream may be set by the application prior to use of the stream to form a network connection. As noted above, such parameters, for example, might be a remote network address, a local network address (when multiple network interfaces 1112 are available on the computing device 1100), local and remote ports, protocol settings, and so forth.

At step 1142 the application uses API 1118 to assign a stream class or category ("class", hereafter) specifically to the stream. The application may assign other classes to other of the application's streams. Step 1142 may be performed at any time during the life of the stream, including when the stream is instantiated, before a network connection is formed for the stream, after the stream is connected and perhaps carrying traffic, when the stream is carrying traffic, etc. Moreover, step 1142 may be performed repeatedly on a same stream to change the class that is currently assigned to the stream, thus, as discussed next, correspondingly changing how the stream manager 1114 regulates the flow of packets through the stream.

At step 1144, the operating system, specifically, the stream manager 1114, controls network resource usage by the network stream. The stream manager 1114 functions as a central coordinator that orchestrates network behavior of multiple (perhaps all) streams being managed by the operating system. The stream manager 1114 may track actual network performance of the streams and regulate their behavior, in particular with respect to latency and bandwidth (throughput) performance, and possibly average throughput over different size time windows. The stream manager 1114 may also receive signals about network conditions, for instance by analyzing return trip times (RTTs) of probe packets, by receiving information about queue sizes of various devices along network paths of the streams, etc. Notably, the stream manager 1114 should be able to determine recent and/or current bandwidth, latency, or both, for each stream. In one embodiment, not all streams have an explicit application-assigned class. However, the stream manager 1114 may also manage these streams, possibly by treating them as having a default class. In one embodiment, the stream manager 1114 is not a distinct module or component, but rather is logic dispersed throughout the operating system 1102 and/or the network stack 1104 (the term "stream manager" as used herein refers to both designs). In other words, the placement of stream management logic is not important.

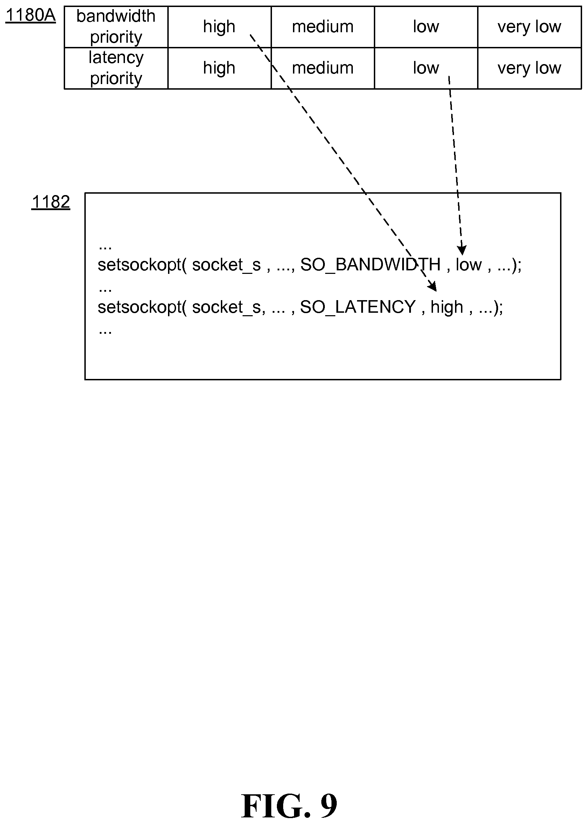

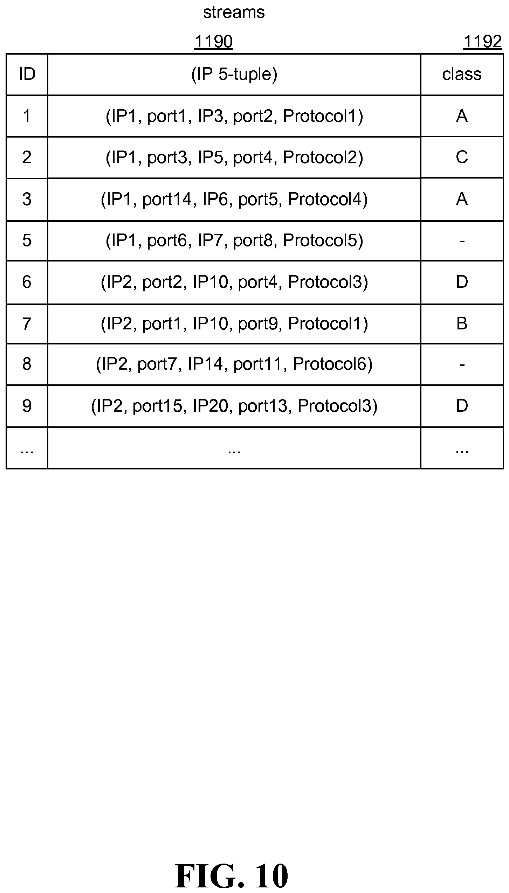

Figure 9 shows an example of a stream classification model 1180A. Figure 9 also shows a sample of code 1182 that assigns a class to a stream. The classification model 1180A has eight classes, with four for bandwidth and four for latency. In this example classification model 1180A, two classes may be assigned to the same stream; one class for bandwidth and one class for latency. As seen in the sample code 1182, a "high" bandwidth and "low" latency classes are assigned to a stream represented by "socket s". In other embodiments, the classification model 1180A might have only bandwidth classes, or only latency classes, or individual classes that have both performance dimensions, as shown in Figure 5. Figure 10 shows example streams 1190 with respective network performance categories. The streams 1190 may have identifiers and classes 1192 as assigned through the API 1116. In one embodiment, classifications of respective streams are flags or properties of respective data structures or objects that the operating system 1102 uses to represent the streams.

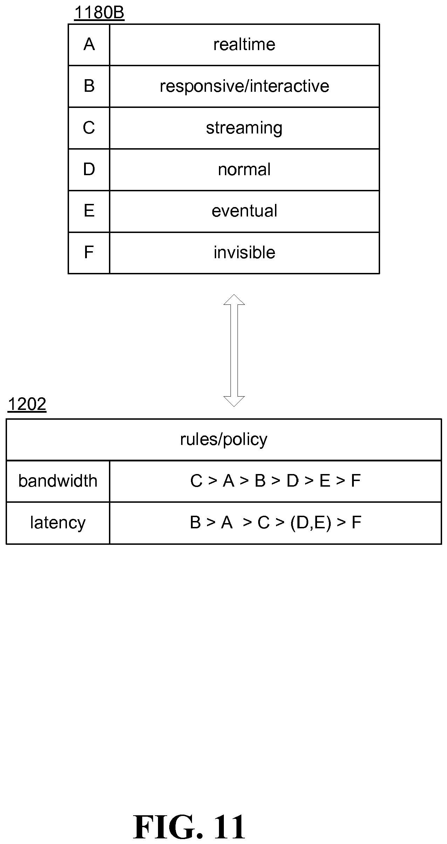

Figure 11 shows another example of a classification model 1180B. The classification model 1180B has six classes (A to F): a realtime class, a responsive (interactive) class, a streaming class, a normal class, an eventual class, and an invisible class. This classification model 1180B may be convenient for developers as the individual classes correspond closely to common types of network-consuming applications. Each class may have, as implemented in logic of the stream manager 1114, respective performance ranges, floors, ceilings, etc., in one or more dimensions of network performance. For example, the classes might be implemented as follows (bandwidth in terms of megabits per second (MBS), latency in terms of milliseconds (ms)):
realtime: 1 MBS, 200 ms,
responsive: 0.1 MBS, 50 ms,
streaming: 3 MBS, 1500 ms,
normal: 0.2 MBS, 5000ms, and
eventual, invisible: 0 MBS, 0 ms.
These numbers are only examples; any values may be used, and some classes may have no bandwidth and/or latency specification.

The stream manager 1114 may have control logic 1200 (Figure 6) to implement policies or rules 1202 for how performance targets of streams, per their classes, are to be achieved when demand creates conflict among the streams. For example, the rules 1202 may specify precedence for bandwidth such that when streaming-class streams are at or near their limits bandwidth is made available by throttling other streams according to their classes. For example, when a category-A stream requires networking resources, invisible streams might be throttled first, then eventual, then normal, then responsive. The classes might also have respective weights to specify relative portions of bandwidth (or latency) to be throttled, thus allowing a stream in a higher priority class to obtain a large portion of bandwidth freed from low priority streams and a small portion of bandwidth freed from medium priority streams. In another embodiment, use of network resources is prioritized or apportioned according to the classes of the streams. If a responsive stream requires additional bandwidth, that bandwidth may be drawn (by throttling, for instance) from which ever streams can spare bandwidth while remaining within their performance specifications, perhaps starting from lowest priority class streams. In sum, collective management of network resource consumption by streams according to their classes may be implemented by a wide range of algorithms, rules/priorities, performance values, etc.

A potential benefit of centralized global management of streams according to application-specified classes is that a user's experience may be improved. For example, suppose that a user's device is running a multimedia streaming application with a network stream that has been classified as "streaming". Suppose also that the user starts a web browser application that classifies its HTTP browsing streams as "responsive" and classifies its download streams as "normal". When the user requests a web page, because the corresponding responsive-class stream has higher latency priority than the streaming-class stream, the streaming-class stream may be temporarily throttled (e.g., for 50 ms) to allow the responsive-class stream to meet its latency requirement. The brief slowdown of the streaming-class stream will likely not be noticed by the user (due to buffering), and the web page will download quickly. If the user initiates a file download, bandwidth may be "borrowed" from the streaming-class stream until its bandwidth floor is reached, thus allowing the normal-class download stream to proceed in a way that maximizes its bandwidth without disrupting the playing of media from the streaming-class stream.

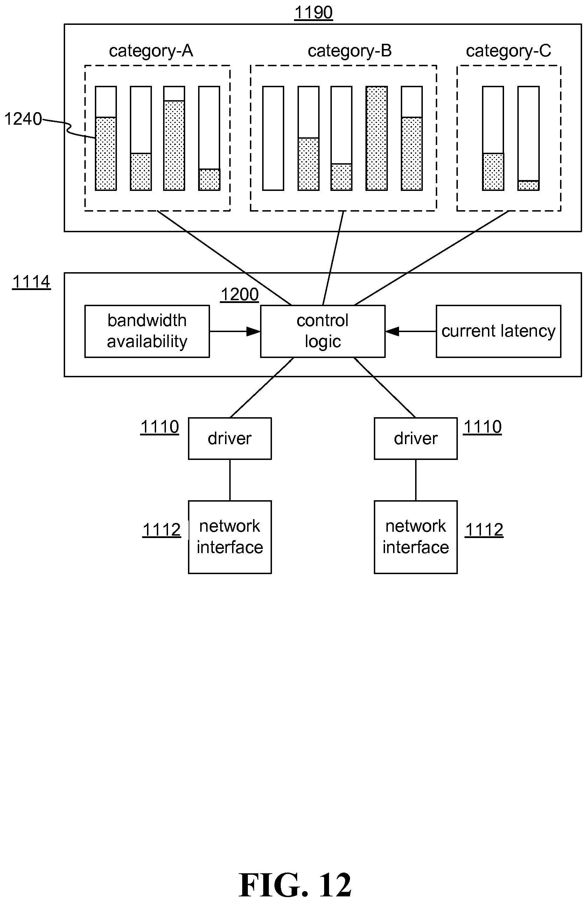

Figure 12 shows a detailed view of the stream manager 1114. The streams 1190 each have a respective queue 1240 where packets are queued before being passed through to a device driver for transmission by a corresponding network interface or after being received from a device driver. The control logic 1200 manages the network performance of the streams 1190 as described above. The control logic 1200 may repeatedly receive updates regarding bandwidth and latency. The updates may come from the interface drivers 1110, the network stack 1104, or external sources. Such updates may indicate a variety of network conditions and statistics such as current bandwidth availability for the computing device 1100 or for the individual network interfaces 1112, current or projected latency information, network congestion, and so forth. The control logic 1200 may use this information to regulate how network resources are consumed by streams.

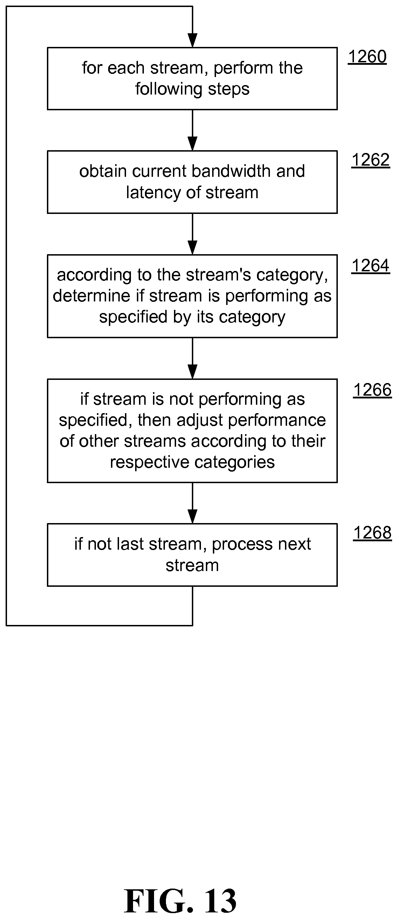

Figure 13 shows an example process by which the control logic 1200 may regulate streams. At a regular interval, the stream manager 1114 may, at step 1260, begin iterating over the active streams ("stream", in this paragraph, refers to the stream of the current iteration). At step 1262 current performance statistics of the stream are obtained. For instance, current or estimated bandwidth and latency are obtained. This information may be estimated from recent throughput, projected according to current traffic statistics, based on the amount of queued packets, the rate of incoming packets, and other known techniques. The class of a stream may affect how often it is iteratively evaluated.

At step 1264, the stream manager 1114 determines the stream's class or category and determines if the stream is (or is expected to be) performing according to its specified category. At step 1266, if the stream is not performing as specified, then the stream manager 1114 implements adaptations intended to satisfy the stream's class specifications. For example, taking into account their classes, other streams may be throttled, paused, etc. This may be accomplished by adjusting the receive windows and/or the send windows of streams, expanding or contracting stream buffers, pausing packet flow through a stream, etc. It is not necessary for applications or other components to tag packets, nor is it necessary for applications to use protocol-level QoS features. From the application's perspective, the streams are ordinary TCP (or similar) streams. At step 1268 a next stream, if any, is processed.

Regarding mentions herein of streams not performing according to specifications of their respective classes, determinations of performance compliance or determinations that drive performance adjustments should be understood as encompassing more than mere performance relative to other connections on the host machine. Protocols such as the LEDBAT protocol, for example, consider a stream to be not performing as specified if the stream's network connection is experiencing one-way delays that are 100 ms higher than the lowest one-way delay the connection has experienced. The assumption is that the LEDBAT connection might be the factor causing the increased delay, and restricting that connection's windows may decrease delay for other connections going across the same shared network resources. Put another way, specifications of stream classes may be relative respect to each other, absolute with respect to performance values, or combinations of both. In addition, a formal language or syntax may be provided to express complex specifications, for example a syntax of Boolean operators, conditional statements, etc., perhaps in the form of a markup-based (e.g. extensible markup files) declarative language. Or, such complex logic may be "hardcoded" into the programming of the streams manager, the network stack, etc.

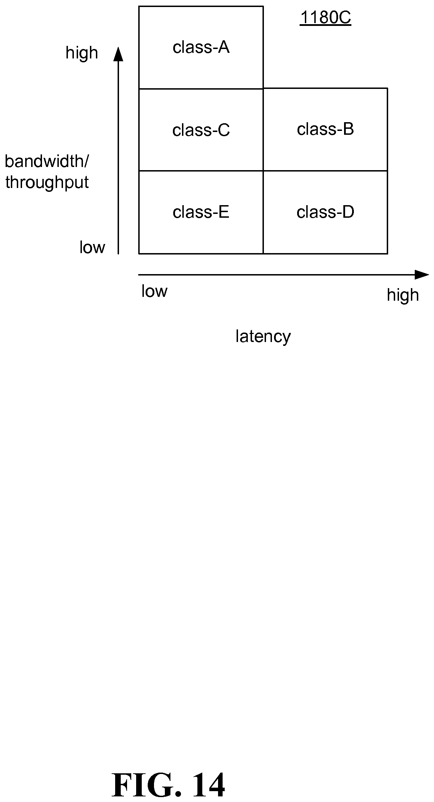

Figure 14 shows another example of a stream classification model 1180C. Each category has a latency component and a bandwidth component. Categories may overlap along either dimension. In this example, classification of a stream assigns both a bandwidth and a latency performance target to a stream. If it is assumed that one class, for instance class-E, is intended to impart on corresponding streams a latency specification that corresponds to real-time or rapid responsiveness (i.e., network traffic will begin to flow with minimal apparent delay in response to a user request), then the stream manager logic may use various network-affecting mechanisms of the local operating system to "backoff or down-regulate other streams, such as class-D streams (or all other streams, or all other active streams, etc.). That is, when a new connection or new traffic begins that is classified as sensitive to latency, low-priority connections can be locally impaired immediately. For example, if a web browser initiated by a user is about to request web objects, background file transfers can pre-emptively be impaired so that upcoming browser traffic starts with a clean network. Prior approaches often rely on quality-of-service decisions that are made based on competing traffic which is usually not immediately helpful for new traffic. A similar approach may be used for bandwidth performance, or for combinations of network performance characteristics. Note that local traffic impairment can be accomplished by pausing the flow of data from applications to their network connections, pausing transmission of buffered packets, adjusting networking window sizes, suspending or downgrading threads that handle stream traffic, or by adjusting other operational parameters of a stream that may potentially affect a stream's consumption of network resources.

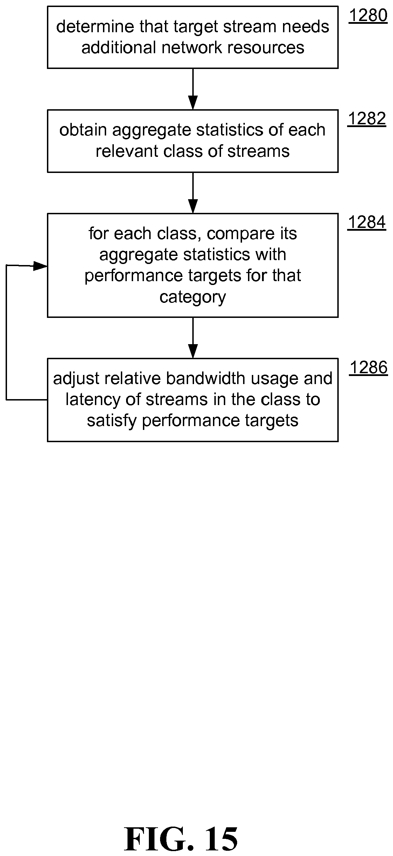

Figure 15 shows a process for an embodiment of collective stream management. In this embodiment, the stream manager 1114 may effectuate reallocation of network resources as follows. At step 1280 it is determined that a target stream needs additional network resources, for instance bandwidth or latency or both, according to its class. For an explanatory example, a class-A stream of classification model 1180C will be assumed to need additional bandwidth. At step 1282, aggregate statistics are acquired for each class of streams. At step 1284, those aggregate statistics are evaluated in class-appropriate order, and at step 1286 they are adjusted as needed. The lowest priority class of streams according to the network need is evaluated first, i.e., class-E. If the aggregate bandwidth of class-E streams has, as a whole, extra bandwidth, then class-E streams are throttled to provide additional bandwidth. If the class-E streams have insufficient bandwidth to yield, then the aggregate statistic of the next priority class - class-C - is evaluated. That is, if throttling class-E streams did not free up sufficient bandwidth, the aggregate bandwidth of class-C streams is evaluated and the streams in that class are throttled as needed. If both class-C and class-E streams cannot surrender sufficient bandwidth while meeting their class requirements, then the lower priority class of streams - class-E - may be pushed below their class's bandwidth targets to help satisfy the higher-priority class-A stream's bandwidth requirement.

If the stream in the example above requires improved latency instead of or in addition to added bandwidth, a similar process is performed, but the evaluation of each class's aggregate statistics, and any adjustments to the streams therein, is performed in an order that depends on the latency traits of the classes.

Although this description may in places refer to network resources as being allocated or reallocated, "allocation" of resources is a conceptual characterization of a side effect of using any of a variety of network-affecting mechanisms (described above) to attempt to satisfy the specifications of stream classes. Moreover, prioritization or stream-regulation measures taken based on stream classes may not necessarily involve immediate increases or decreases in consumption of network resources by corresponding streams. For example, protocols such as the LEDBAT protocol (which may be modified to provide stream classes) may not necessarily harm the bandwidth or latency of a low-priority connection when LEDBAT has decided that a low-priority connection needs to be "restricted". For example, reducing the size of a connection's send window may have no immediate impact on its throughput or latency; for many possible reasons the connection may subsequently get better throughput or latency.

Figure 16 shows additional details of the generic computing device 1100 on which embodiments described above may be implemented. The computing device 1100 may have a display 1300 as well as storage 1302 and processing hardware 1304, which may be a combination of any one or more: central processing units, graphics processing units, analog-to-digital converters, bus chips, Field-programmable Gate Arrays (FPGAs), Application-specific Integrated Circuits (ASICs), Application-specific Standard Products (ASSPs), or Complex Programmable Logic Devices (CPLDs), etc. The storage 1302 may be any combination of magnetic storage, static memory, volatile memory, etc. The meaning of the term "storage", as used herein does not refer to signals or energy per se, but rather refers to physical apparatuses (including physical media such as magnetic storage media, optical storage media, static memory devices, etc., but not signals per se). The hardware elements of the computing device 1100 may cooperate in ways well understood in the art of computing. In addition, input devices 1306 may be integrated with or in communication with the computing device 1100. The computing device 1100 may have any form factor or may be used in any type of encompassing device. The computing device 1100 may be in the form of a handheld device such as a smartphone, a tablet computer, a gaming device, a server, a rack-mounted or backplaned computer-on-aboard, a System-on-a-chip, or others. Generally, the computing device 1100 will be a discrete network node or device.

Embodiments and features discussed above can be realized in the form of information stored in volatile or non-volatile computer or device readable apparatuses, with such information able to configure the computing device 1100 to perform the embodiments described herein. These apparatuses may include apparatuses such as optical storage (e.g., compact-disk read-only memory (CD-ROM)), magnetic media, holographic storage, flash read-only memory (ROM), or other devices for storing digital information. The stored information can be in the form of machine executable instructions (e.g., compiled executable binary code), source code, bytecode, or other information that can be used to enable or configure computing devices to perform the embodiments described herein. This is also deemed to include at least volatile memory such as random-access memory (RAM) and/or virtual memory storing information such as central processing unit (CPU) instructions during execution of software carrying out an embodiment, as well as non-volatile devices storing information that allows a program or executable to be loaded and executed.

## Claims

1. A method performed by a computing device comprising storage, processing hardware, and a network interface, the method comprising:
automatically identifying static features of respective applications as installed on the computing device and/or automatically identifying dynamic features of the applications that manifest during execution of the applications on the computing device, wherein the identifying is not performed by the applications;
accessing a mapping that maps predefined application features to network streaming classes, the network stream classes implemented by the computing device;
assigning weights to application features for different network stream classes;
matching the identified application features to the predefined application features of the mapping to determine, from the mapping, which applications belong to which network streaming classes, and storing classification indications indicating which applications were determined to be in which network stream classes; and
regulating, by an operating system of the computing device, transmission of packets of the streams by the network interface, wherein any given application's stream is regulated according to which network stream class the classification indications indicate that the given application is in;
maintaining a running score for each class that could be selected from a classification model, using the features of the application that are matched in the mappings and adding the weights to the class scores;
selecting the class having the highest resulting score as a default class for a target application.

2. A method according to claim 1, wherein the static features comprise components of the operating system determined, by the identifying, to be referenced by the applications.

3. A method according to claim 1, wherein the automatically identifying the static features is performed for an application responsive to determining that the application is not already associated with a network stream class.

4. A method according to claim 1, wherein static features of an application are identified while the application is not executing on the computing device.

5. A method according to claim 1, further comprising: if an application in the classification indications begins to use an application programming interface for explicit stream classification, then the classification associated with the application is removed or overridden.

6. One or more computer readable storage devices storing information to enable a computing device to perform a process, the process, when performed, comprising:
determining which applications, configured to run on the computing device, belong to which network streaming classes by referring to a mapping that maps predefined application features to network streaming classes;
assigning weights to application features for different network stream classes; determining classes of streams associated with applications according to the determined network streaming classes for respective applications, the streams providing network packets, passed through a network interface of the computing device, between a network and the applications; and
controlling, by an operating system of the computing device, throughput and/or latency of the streams of the applications, wherein each stream has a respective send window size and a respective receive window size, and wherein the operating system controls each stream's throughput and/or latency by adapting each stream's send window size and receive window size according each stream's respective class and maintaining a running score for each class that could be selected from a classification model, using the features of the application that are matched in the mappings and adding the weights to the class scores;
selecting the class having the highest resulting score as a default class for a target application.

7. One or more computer readable storage devices according to claim 6, the process further comprising: determining from a class associated with a first stream that the send and receive window of a second stream are to be reduced to satisfy a characteristic of the class associated with the first stream.

8. One or more computer readable storage devices according to claim 6, wherein the process further comprises:
executing an event publication service on the computing device, the event publication service responding to a request from an application by subscribing the application, and wherein when a network condition of the computing device is determined to have changed, the event publication service publishes a corresponding event to the application based on the application being a subscriber to the event publication service.

9. A computing device comprising:
storage hardware storing information to enable a processor, when the computing device is operating, to execute an operating system;
the processor, when the computing device is operating, coupled with memory to execute the operating system; and
the operating system, when executing, comprising a stream manager that manages network streams that provide transmission control protocol (TCP) packets between a network and applications executed by the operating system, the stream manager implementing a pre-defined set of stream classes with respectively associated stream class performance specifications, wherein features of the applications in the storage hardware or memory are identified and used to determine associations between the applications and the network stream classes, wherein the application features are assigned weights for different network stream classes;
the associations between the applications and network stream classes stored in the storage hardware and/or memory, wherein the associations are determined based on pre-defined associations between the features and the network stream classes, and wherein for any given stream the operating system regulates behavior of the given stream using the stream class performance specification of the network stream class that is associated with an application that instantiated the given stream and further maintaining a running score for each class that could be selected from a classification model, using the features of the application that are matched in the mappings and adding the weights to the class scores;
the class having the highest resulting score as a default class for a target application is selected.

10. A computing device according to claim 9, wherein the stream class performance specifications comprise prioritizations or values of latency and/or bandwidth.

## Patentansprüche

1. Verfahren, das durch eine Rechenvorrichtung die einen Speicher, Verarbeitungshardware und eine Netzwerkschnittstelle enthält ausgeführt wird, wobei das Verfahren umfasst:
automatisches Identifizieren statischer Merkmale jeweiliger Anwendungen, wie auf der Rechenvorrichtung installiert, und/oder automatisches Identifizieren dynamischer Merkmale der Anwendungen, die sich während einer Durchführung der Anwendungen auf der Rechenvorrichtung manifestieren, wobei das Identifizieren nicht durch die Anwendungen ausgeführt wird;
Zugreifen auf ein Mapping, das vordefinierte Anwendungsmerkmale auf Netzwerkstromklassen abbildet, wobei die Netzwerkstromklassen durch die Rechenvorrichtung implementiert werden;
Zuweisen von Gewichtungen an Anwendungsmerkmale für verschiedene Netzwerkstromklassen;
Vergleiche der identifizierten Anwendungsmerkmale mit den vordefinierten Anwendungsmerkmalen des Mappings, um vom Mapping ausgehend zu ermitteln, welche Anwendungen zu welchen Netzwerkstromklassen gehören, und Speichern von Klassifizierungsindikatoren, die anzeigen, welche Anwendungen als zu welchen Netzwerkstromklassen zugehörig ermittelt wurden; und
Regulieren, durch ein Betriebssystem der Rechenvorrichtung, einer Übertragung von Paketen der Ströme durch die Netzwerkschnittstelle, wobei irgendein gegebener Strom einer Anwendung entsprechend einer Netzwerkstromklasse reguliert wird, in der sich die gegebene Anwendung gemäß der Klassifizierungsindikatoren befindet;
Beibehalten einer laufenden Auswertung für jede Klasse, die aus einem Klassifizierungsmodell ausgewählt werden könnte, unter Verwendung der Merkmale der Anwendung, die in den Mappings übereingestimmt werden, und Hinzufügen der Gewichtungen zu den Klassenwerten;
Auswählen der Klasse mit dem höchsten Ergebniswert als eine Standardklasse für eine Zielanwendung.

2. Verfahren nach Anspruch 1, wobei die statistischen Merkmale Komponenten des Betriebssystems umfassen, die, durch das Identifizieren, bestimmt sind, durch die Anwendungen referenziert zu werden.

3. Verfahren nach Anspruch 1, wobei das automatische Identifizieren der statistischen Merkmale für eine Anwendung in Reaktion auf ein Ermitteln, dass die Anwendung nicht bereits einer Netzwerkstromklasse zugehörig ist, ausgeführt wird.

4. Verfahren nach Anspruch 1, wobei statische Merkmale einer Anwendung identifiziert werden, während die Anwendung nicht auf der Rechenvorrichtung durchgeführt wird.

5. Verfahren nach Anspruch 1, ferner umfassend: falls eine Anwendung in den Klassifizierungsindikatoren beginnt, eine Anwendungsprogrammierungsschnittstelle für eine explizite Stromklassifizierung zu verwenden, dann die der Anwendung zugehörige Klassifizierung entfernt oder überschrieben wird.

6. Eine oder mehr lesbare Speichervorrichtungen, die Informationen speichern, um eine Rechenvorrichtung zu befähigen, einen Prozess auszuführen, der Prozess, wenn ausgeführt, umfassend:
Bestimmen, welche Anwendungen, die konfiguriert sind, auf der Rechenvorrichtung zu laufen, zu welchen Netzwerkstromklassen gehören, durch Bezugnahme auf ein Mapping, das vordefinierte Merkmale auf Netzwerkstromklassen abbildet;
Zuweisen von Gewichten zu Anwendungsmerkmalen für verschiedene Netzwerkstromklassen;
Bestimmen von Klassen von Strömen, die mit Anwendungen gemäß den bestimmten Netzwerkstromklassen für jeweilige Anwendungen assoziiert sind, wobei die Ströme Netzwerkpakete, die durch eine Netzwerkschnittstelle der Rechenvorrichtung durchgeleitet werden, zwischen einem Netzwerk und den Anwendungen bereitstellen; und
Steuern eines Durchsatzes und/oder einer Latenz der Ströme der Anwendungen durch ein Betriebssystem der Rechenvorrichtung, wobei jeder Strom eine jeweilige Sendefenstergröße und eine jeweilige Empfangsfenstergröße hat, und wobei das Betriebssystem den Durchsatz und/oder die Latenz jedes Stroms durch Anpassen der Sendefenstergröße und Empfangsfenstergröße jedes Stroms gemäß der jeweiligen Klasse jedes Stroms steuert, und Beibehalten einer laufenden Auswertung für jede Klasse, die aus einem Klassifizierungsmodell ausgewählt werden könnte, unter Verwendung der Merkmale der Anwendung, die in den Mappings übereingestimmt werden, und Hinzufügen der Gewichte zu den Klassenwerten;
Auswählen der Klasse mit dem höchsten Ergebniswert als eine Standardklasse für eine Zielanwendung.

7. Eine oder mehr rechnerlesbare Speichervorrichtungen nach Anspruch 6, der Prozess ferner umfassend: Bestimmen, von einer Klasse, die einem ersten Strom zugehörig ist, dass das Sende- und Empfangsfenster eines zweiten Stroms zu reduzieren sind, um eine Eigenschaft der Klasse, die dem ersten Strom zugehörig ist, zu erfüllen.

8. Eine oder mehr rechnerlesbare Speichervorrichtungen nach Anspruch 6, wobei der Prozess ferner umfasst:
Ausführen eines Ereignisveröffentlichungsdienstes auf der Rechenvorrichtung, wobei der Ereignisveröffentlichungsdienst auf eine Anfrage von einer Anwendung durch Eintragen der Anwendung antwortet, und wobei, wenn bestimmt wird, dass sich eine Netzwerkbedingung der Rechenvorrichtung geändert hat, der Ereignisveröffentlichungsdienst ein entsprechendes Ereignis an die Anwendung veröffentlicht, basierend darauf, dass die Anwendung ein Teilnehmer beim Ereignisveröffentlichungsdienst ist.

9. Rechenvorrichtung umfassend:
Speicherhardware, die Informationen speichert, um einen Prozessor zu befähigen ein Betriebssystem durchzuführen, wenn die Rechenvorrichtung in Betrieb ist;
den Prozessor, der, wenn die Rechenvorrichtung in Betrieb ist, mit dem Speicher gekoppelt, um das Betriebssystem durchzuführen; und
das Betriebssystem, wenn ausgeführt, umfassend eine Stromverwaltung, die Netzwerkströme verwaltet, die Übertragungssteuerprotokoll- (TCP-) Pakete zwischen einem Netzwerk und Anwendungen, die durch das Betriebssystem ausgeführt werden, bereitstellen, wobei die Stromverwaltung einen vordefinierten Satz von Stromklassen mit jeweils zugehörigen Stromklassenleistungsspezifikationen implementiert, wobei Merkmale der Anwendungen in der Speicherhardware oder dem Speicher identifiziert und verwendet werden, um Zugehörigkeiten zwischen den Anwendungen und den Netzwerkstromklassen zu bestimmen, wobei die Anwendungsmerkmale zugewiesene Gewichtungen für verschiedene Netzwerkstromklassen sind;
die Zugehörigkeiten zwischen den Anwendungen und Netzwerkstromklassen, die in der Speicherhardware und/oder dem Speicher gespeichert sind, wobei die Zugehörigkeiten basierend auf vordefinierten Zugehörigkeiten zwischen den Merkmalen und den Netzwerkstromklassen bestimmt sind, und wobei für irgendeinen gegebenen Strom das Betriebssystem ein Verhalten des gegebenen Stroms unter Verwendung der Stromklassenleistungsspezifikation der Netzwerkstromklasse reguliert, die einer Anwendung zugehörig ist, die den gegebenen Strom einrichtet und ferner einen Laufwert für jede Klasse erhält, die aus einem Klassifizierungsmodell ausgewählt werden könnte, unter Verwendung der Merkmale der Anwendung, die in den Mappings übereingestimmt werden, und Hinzufügen der Gewichtungen zu den Klassenwerten;
die Klasse mit dem höchsten Ergebniswert als eine Standardklasse für eine Zielanwendung ausgewählt ist.

10. Rechenvorrichtung nach Anspruch 9, wobei die Stromklassenleistungsspezifikationen Priorisierungen oder Werte von Latenz und/oder Bandbreite umfassen.

## Revendications

1. Procédé mis en oeuvre par un dispositif informatique comprenant un magasin de stockage, du matériel de traitement et une interface réseau, le procédé comprenant les étapes ci-dessous consistant à :
identifier automatiquement des caractéristiques statiques d'applications respectives, telles qu'elles sont installées sur le dispositif informatique, et/ou identifier automatiquement des caractéristiques dynamiques des applications, qui se manifestent au cours de l'exécution des applications sur le dispositif informatique, dans lequel l'identification n'est pas mise en oeuvre par les applications ;
accéder à une mise en correspondance qui met en correspondance des caractéristiques d'applications prédéfinies avec des classes de flux de réseaux, les classes de flux de réseaux étant mises en oeuvre par le dispositif informatique ;
affecter des pondérations aux caractéristiques d'applications pour différentes classes de flux de réseaux ;
faire correspondre les caractéristiques d'applications identifiées aux caractéristiques d'applications prédéfinies de la mise en correspondance en vue de déterminer, à partir de la mise en correspondance, quelles applications appartiennent à quelles classes de flux de réseaux, et stocker des indications de classification indiquant quelles applications ont été déterminées comme se situant dans quelles classes de flux de réseaux ; et
réguler, par un système d'exploitation du dispositif informatique, une transmission de paquets des flux par l'interface réseau, dans lequel le flux d'une application quelconque donnée est régulé selon la classe de flux de réseau indiquée comme se situant dans l'application donnée par les indications de classification ;
maintenir un score en cours pour chaque classe qui pourrait être sélectionnée à partir d'un modèle de classification, en utilisant les caractéristiques de l'application qui sont associées dans les mises en correspondance, et ajouter les pondérations aux scores de classe ;
sélectionner la classe présentant le score résultant le plus élevé en tant que classe par défaut pour une application cible.

2. Procédé selon la revendication 1, dans lequel les caractéristiques statiques comprennent des composants du système d'exploitation déterminés, à l'étape d'identification, comme étant référencés par les applications.

3. Procédé selon la revendication 1, dans lequel l'étape d'identification automatique des caractéristiques statiques est mise en oeuvre pour une application en réponse à la détermination selon laquelle l'application n'est pas déjà associée à une classe de flux de réseau.

4. Procédé selon la revendication 1, dans lequel des caractéristiques statiques d'une application sont identifiées tandis que l'application n'est pas en cours d'exécution sur le dispositif informatique.

5. Procédé selon la revendication 1, dans lequel en outre : si une application dans les indications de classification commence à utiliser une interface de programmation d'application pour une classification explicite de flux, alors la classification associée à l'application est supprimée ou écrasée.

6. Un ou plusieurs dispositifs de stockage lisibles par ordinateur stockant des informations pour permettre à un dispositif informatique de mettre en oeuvre un processus, le processus, lorsqu'il est exécuté, comprenant les étapes ci-dessous consistant à :
déterminer quelles applications, configurées de manière à s'exécuter sur le dispositif informatique, appartiennent à quelles classes de flux de réseaux, en faisant référence à une mise en correspondance qui met en correspondance les caractéristiques d'applications prédéfinies avec les classes de flux de réseaux ;
affecter des pondérations à des caractéristiques d'applications pour différentes classes de flux de réseaux ; déterminer des classes de flux associées à des applications selon les classes de flux de réseaux déterminées pour les applications respectives, les flux fournissant des paquets de réseau, transmis à travers une interface réseau du dispositif informatique, entre un réseau et les applications ; et
commander, par le biais d'un système d'exploitation du dispositif informatique, un débit et/ou une latence des flux des applications, dans lequel chaque flux présente une taille de fenêtre d'émission respective et une taille de fenêtre de réception respective, et dans lequel le système d'exploitation commande le débit et/ou la latence de chaque flux en adaptant la taille de fenêtre d'émission et la taille de fenêtre de réception de chaque flux selon la classe respective de chaque flux, et en maintenant un score en cours pour chaque classe qui pourrait être sélectionnée à partir d'un modèle de classification, en utilisant les caractéristiques de l'application qui sont associées dans les mises en correspondance et en ajoutant les pondérations aux scores de classe ;
sélectionner la classe présentant le score résultant le plus élevé en tant que classe par défaut pour une application cible.

7. Un ou plusieurs dispositifs de stockage lisibles par ordinateur selon la revendication 6, dans lesquels le processus comprend en outre l'étape consistant à : déterminer, à partir d'une classe associée à un premier flux, que les fenêtres d'émission et de réception d'un second flux doivent être réduites pour satisfaire une caractéristique de la classe associée au premier flux.

8. Un ou plusieurs dispositifs de stockage lisibles par ordinateur selon la revendication 6, dans lequel le processus comprend en outre l'étape ci-dessous consistant à :
exécuter un service de publication d'événements sur le dispositif informatique, le service de publication d'événements répondant à une demande en provenance d'une application en souscrivant à l'application, et dans lesquels, lorsqu'il est déterminé qu'une condition de réseau du dispositif informatique a changé, le service de publication d'événements publie un événement correspondant à l'application sur la base du fait que l'application est un abonné au service de publication d'événements.

9. Dispositif informatique comprenant :
du matériel de stockage stockant des informations pour permettre à un processeur, lorsque le dispositif informatique est en cours de fonctionnement, d'exécuter un système d'exploitation ;
le processeur, lorsque le dispositif informatique est en cours de fonctionnement, étant couplé à une mémoire pour exécuter le système d'exploitation ; et
le système d'exploitation, lorsqu'il est exécuté, comprenant un gestionnaire de flux qui gère des flux de réseaux qui fournissent des paquets de protocole de commande de transmission (TCP) entre un réseau et des applications exécutées par le système d'exploitation, le gestionnaire de flux mettant en oeuvre un ensemble prédéfini de classes de flux avec des spécifications de performances de classes de flux respectivement associées, dans lequel des caractéristiques des applications dans le matériel de stockage ou la mémoire sont identifiées et utilisées en vue de déterminer des associations entre les applications et les classes de flux de réseaux, dans lequel les caractéristiques d'applications se voient affecter des pondérations pour différentes classes de flux de réseaux ;
les associations entre les applications et les classes de flux de réseaux stockées dans le matériel de stockage et/ou la mémoire, dans lequel les associations sont déterminées sur la base d'associations prédéfinies entre les caractéristiques et les classes de flux de réseaux, et dans lequel, pour un flux donné quelconque, le système d'exploitation régule le comportement du flux donné en utilisant la spécification de performances de classes de flux de la classe de flux de réseau qui est associée à une application ayant instanciée le flux donné, et en maintenant en outre un score en cours pour chaque classe qui pourrait être sélectionnée à partir d'un modèle de classification, en utilisant les caractéristiques des applications qui sont associées dans les mises en correspondance et en ajoutant les pondérations aux scores de classe ;
la classe présentant le score résultant le plus élevé en tant que classe par défaut pour une application cible est sélectionnée.

10. Dispositif informatique selon la revendication 9, dans lequel les spécifications de performances de classes de flux comprennent des priorisations ou des valeurs de latence et/ou de bande passante.
